# EUROPÄISCHE PATENTSCHRIFT

(11) **EP 0 584 320 B1**
(45) Veröffentlichungstag und Bekanntmachung des Hinweises auf die Patenterteilung: **29.11.1995**
(21) Anmeldenummer: 93905131.4
(22) Anmeldetag: 15.03.1993
(51) Int. Cl.: F16B 47/00, F16C 11/06

(54) **SAUGNAPFARTIGE HALTEVORRICHTUNG**
SUCTION-TYPE CLAMP
DISPOSITIF DE FIXATION SE PRESENTANT SOUS FORME DE VENTOUSE

(30) Priorität: 16.03.1992 CH 835/92
(43) Veröffentlichungstag der Anmeldung: 02.03.1994
(73) Patentinhaber: MESSINGER, Jules, CH-8057 Zürich (CH)
(72) Erfinder: MESSINGER, Jules, CH-8057 Zürich (CH)
(74) Vertreter: Feldmann, Clarence Paul
(86) Internationale Anmeldenummer: CH9300069
(87) Internationale Veröffentlichungsnummer: WO9319304

(56) Entgegenhaltungen:
- DE-A- 2 044 859
- FR-A- 945 385
- FR-A- 2 351 302
- GB-A- 2 185 067

## Beschreibung

Die Erfindung betrifft eine saugnapfartige Haltevorrichtung mit einer flexiblen Membran, mit einem darin eingebetteten zentralen Zapfen, einem am Umfangsbereich der Membran aufliegenden Druckring und Mitteln zum Anheben des zentralen Zapfens relativ zum Druckring.
Eine solche Haltevorrichtung ist beispielsweise aus der GB-PS 2'185'067 bekannt. Hier ist der Druckring oben abgedeckt, der Zapfen ragt durch diese Abdeckung hindurch und wird durch ein Betätigungsorgan nach oben gezogen. Eine schraubenförmige Rampe zieht den Zapfen nach oben. Dazu muss das Betätigungsorgan gedreht werden und dabei besteht immer die Gefahr, dass der Druckring sich mitdreht und über die Membran gleitet.

Die Erfindung hat sich zur Aufgabe stellt, eine möglichst einfach aufgebaute Haltevorrichtung dieser Art zu schaffen, die diese Gefahr vermeidet.

In der beigefügten Zeichnung ist ein Ausführungsbeispiel des Erfindungsgegenstandes dargestellt. Es zeigt:
- Figur 1: einen Haltevorrichtung im Schnitt;
- Figur 2: den Druckring der Vorrichtung nach Figur 1;
- Figuren 3 und 4: die Membran der Vorrichtung nach Figur 1 in Ansicht von oben und in Seitenansicht;
- Figur 5: den Deckel der Vorrichtung nach Figur 1 in Ansicht von unten;
- Figur 6: die Haltevorrichtung nach Figur 1 in Seitenansicht und

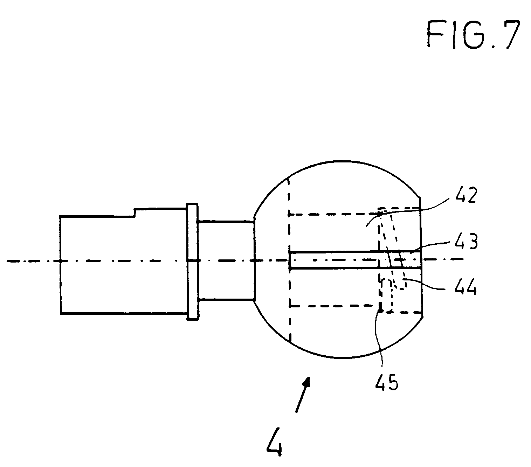

- Figur 7: zeigt ein Detail der Haltevorrichtung im Schnitt.

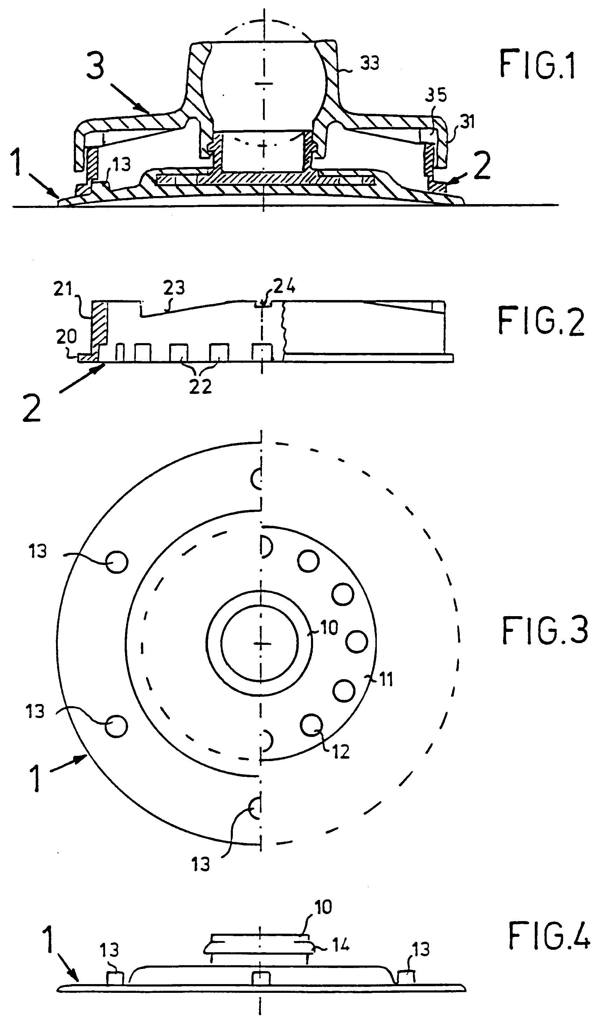

Die Haltevorrichtung besteht im wesentlichen aus drei Teilen, einer Membran 1, einem Druckring 2 und einem Deckel 3. In Figur 1 ist die Haltevorrichtung in Betriebslage dargestellt, in welcher sich die Vorrichtung an einer glatten Oberfläche, wie zum Beispiel einer Glasplatte oder Spiegel festgesaugt hat. Im folgenden sind zuerst die einzelnen Teile im Detail beschreiben und danach deren Zusammenwirken erläutert.

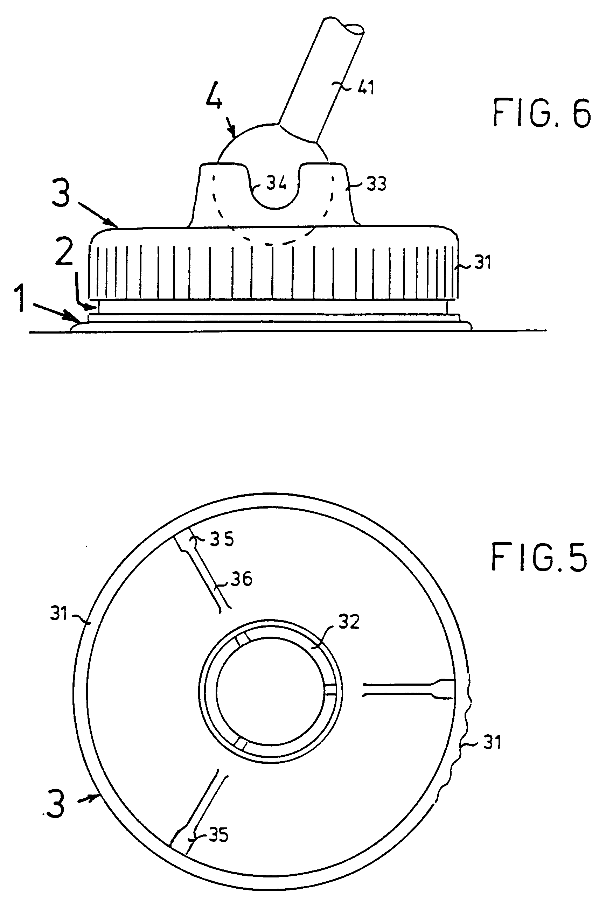

Die kreisrunde Membran 1 besteht aus Gummi oder gummielastischem Kunststoff. Im Zentrum ist ein Zapfen 10 aus hartem Kunststoff angebracht, dessen Flansch 11 in das Material der Membran eingebettet ist. Zum besseren Haftung der Membran 1 am Flansch 11 ist dieser mit einer Vielzahl von Löchern 12 versehen. In Figur 3 ist die linke Hälfte in Ansicht von oben dargestellt, die rechte Hälfte zeigt den Flansch 11. Auf der linken Hälfte der Figur 3 und in Figur 4 sind die aus der oberen Fläche der Membran emporragenden Nocken 13 deutlich erkennbar. Im dargestellten Beispiel sind sechs kreisförmig angeordnete Nocken dargestellt. Der Zapfen ist aus Gründen der Materialersparnis und aus Herstellungsgründen hohl ausgebildet. Am oberen Bereich ist er mit einem Bund 14 versehen, dessen Zweck im Nachfolgenden erläutert wird. Der Druckring 2 (siehe Figur 2) besteht aus hartem Kunststoff. Er weist unten einen vorstehenden Rand 20 auf. Seine Wand 21 ist auf der Innenseite mit gleichmässig verteilten Ausnehmungen 22 versehen, die die Form halbrunder Nischen aufweisen, deren Rundung etwa dem Durchmesser der Nocken 13 entspricht. Entlang dem Umfang gleichmässig verteilt sind vierundzwanzig solcher Ausnehmungen 22 angebracht. Im oberen Rand der Wand sind gleichmässig über den Umfang verteilt drei Rampen 23 angebracht, die in den Rand auslaufen. Am oberen Ende der Rampe ist jeweils eine kleine Vertiefung 24 angebracht, die als Rast dient.

Der Deckel 3 (Figur 1 und 5) hat einen, im montiertem Zustand den Druckring mit Spiel überlappenden, Rand 31. Im Zentrum des Deckels befindet sich eine geschlitzte Hülse 32, die innnen mit einer Nut versehen ist, die dem Bund des Zapfens entspricht. Auf der Oberseite des Deckels ist ein Kragen 33 angebracht, der innen kugelig ausgebildet ist, und in den die Kugel 4 eines Halteorganes 41 eingepresst werden kann. Der Kragen 33 ist mit einem Schlitz 34 versehen, welcher erlaubt das Halteorgan 41 ganz herunterzuschwenken. Die Kugel 4 wird in jeder Lage klemmend gehalten.

An der Unterseite des Deckels, nahe dem Rand, sind drei Nocken 35 angebracht, die in die zum Zentrum gerichtete Rampe 36 übergehen (siehe Figur 5).

Bei der Montage wird der Druckring 2 auf die Membran 1 aufgesetzt in einer Lage bei der die Nocken 13 in die Aufnehmungen 22 eingreifen. Dadurch ist der Druckring zugleich verdrehungsfest mit der Membran verbunden und auf der Membran zentriert. Jetzt kann der Deckel 3 auf den Zapfen 10 aufgedrückt werden, wobei die geschlitzte Hülse über den Zapfen gleitet und der Bund 14 druckknopfartig in die Nut in der Hülse 32 einschnappt. Die Haltevorrichtung kann jetzt ohne Materialzerstörung nicht mehr auseinandergenommen werden.

In Ruhezustand liegen die Nocken 35 in der tiefsten Lage der Rampen 23 auf.
Wird nun die Vorrichtung auf eine glatte Fläche gedrückt und der Deckel gedreht, gleiten die Nocken entlang der Rampen, was bedeutet, dass sich der Deckel bezüglich des Druckringes nach oben bewegt und den Zapfen 10 der Membran mitnimmt. Dadurch entsteht die gewünschte Saugwirkung.

Da solche Haltevorrichtungen oftmals im Badzimmer eingesetzt werden, um Kosmetikspiegel zu halten, ist es wünschenswert diese zu galvanisieren. Der galvanische Ueberzug über den Deckel 3 führt dazu, dass der Kragen 33 kaum noch eine Elastizität aufweist. Das Kugelgelenk, gebildet aus dem Kragen 33, welcher die Pfanne bildet und das kugelige Ende (4) des Halteorganes, welches den Kugelkopf darstellt, wird dadurch kaum noch selbsthemmend. Um die Anpressreibung zu erhöhen, wird vorgeschlagen, den Kugelkopf 4 mit einem zentrischen Sackloch 42 zu versehen und zu dem in Richtung der Bohrungsachse mit krenzweise angeordneten Schlitzen 43 auszugestalten. Der Anpressdruck lässt sich nun einstellen durch die Einlage eines radial rückenden Federringes 44. Um den Federring in der korrekten Lage zu halten, ist das Sackloch 42 mit einer stufigen Verengung 45 versehen, die einen Anschlag für den Federring 44 bildet.

## Patentansprüche

1. Saugnapfartige Haltevorrichtung bestehend aus einer flexiblen Membran (1) mit einem darin eingebetteten zentralen Zapfen (10), einem am Umfangsbereich der Membran aufliegenden Druckring (2) und Mitteln zum Anheben des zentralen Zapfens relativ zum Druckring, dadurch gekennzeichnet, dass die Membran (1) eine Anzahl von kreisförmig angeordneten Nocken (13) aufweist, die in die an der Innenseite des Druckringes (2) angeordnete Ausnehmungen (22) eingreifen und die Membran drehfest aber axial verschiebbar mit dem Druckring verbinden.

2. Haltevorrichtung nach Anspruch 1, dadurch gekennzeichnet, dass die Mittel zum Anheben des zentralen Zapfens (10) einen drehbar aber axial fest mit ihm verbundenen Deckel (3) umfassen an dessen Unterseite Erhebungen (35) angebracht sind, die mit am oberen Rand des Druckringes angebrachten Rampen (23) zusammenwirken.

3. Haltevorrichtung nach Anspruch 1, dadurch gekennzeichnet, dass die Unterseite des Deckels eine axial geschlitzte Hülse (32) mit einem nach innen gerichteten Rand aufweist, und dass der zentrale Zapfen (10) einen Kragen (14) hat, so dass die Hülse druckknopfartig mit Schnappwirkung auf den Zapfen aufsetzbar ist.

4. Haltevorrichtung nach Anspruch 1, dadurch gekennzeichnet, dass der Deckel (3) einen den Druckring (2) überlappenden Rand (31) mit griffiger Aussenkontur hat.

5. Haltevorrichtung nach Anspruch 1, dadurch gekennzeichnet, dass die Oberseite des Deckels einen inwendig hohlkugelig ausgebildeten Kragen (33) hat zur klemmenden Aufnahme eines kugeligen Endes (4) eines Halteorganes.

6. Haltevorrichtung nach Anspruch 5, dadurch gekennzeichnet, dass das kugelige Ende (4) ein zentrisches Sackloch mit stufiger Verengung aufweist und kreuzweise in der Richtung des Sackloches geschlitzt ist, wobei in das Sackloch ein radial wirkender Federring eingelegt ist.

## Claims

1. A suction cup-like holding device comprising a flexible membrane (1) with a central stud (10) embedded therein, a pressure ring (2) resting on the circumferential area of the membrane and means for raising the central stud relative to the pressure ring, characterised in that the membrane (1) has a plurality of cams (13) arranged in circular manner and which engage in recesses (22) on the inside of the pressure ring (2) and connect the membrane in non-rotary but axially displaceable manner to the pressure ring.

2. A holding device according to claim 1, characterised in that the means for raising the central stud (10) comprises a lid (3) connected in rotary but axially fixed manner thereto and to the underside of which are fitted protuberances (35), which cooperate with ramps (23) fitted to the upper edge of the pressure ring.

3. A holding device according to claim 1, characterised in that the underside of the lid has an axially slotted sleeve (32) with an inwardly directed edge and in that the central stud (10) has a collar (14), so that the sleeve can be engaged in pushbutton-like manner and with snap action on the stud.

4. A holding device according to claim 1, characterised in that the lid (3) has an edge (31) with a gripping outer contour overlapping the pressure ring (2).

5. A holding device according to claim 1, characterised in that the top of the lid has an internally hollow spherical collar (33) for the clamping reception of a spherical end (4) of a holding member.

6. A holding device according to claim 5, characterised in that the spherical end (4) has a central blind hole with a graduated constriction and is slotted crosswise in the direction of the blind hole, a radially acting spring washer being inserted in the blind hole.

## Revendications

1. Dispositif de fixation se présentant sous forme de ventouse, consistant en une membrane flexible (1) ayant un tenon central (10) qui y est inséré, un anneau de compression (2) appuyé sur la partie périphérique de la membrane et des moyens pour soulever le tenon central par rapport à l'anneau de compression, caractérisé en ce que la membrane (1) présente un certain nombre d'ergots (13) disposés circulairement, qui s'engagent dans les creux (22) disposés sur la face interne de l'anneau de compression (2) et relient la membrane, avec résistance à la rotation mais déplacement axial possible, avec l'anneau de compression.

2. Dispositif de fixation selon la revendication 1, caractérisé en ce que les moyens pour soulever le tenon central (10) comprennent un couvercle (3) relié à lui, mobile en rotation mais fixe axialement, sur la face inférieure duquel sont disposées des proéminences (35) qui coopèrent avec des rampes (23) disposées sur le bord supérieur de l'anneau de compression.

3. Dispositif de fixation selon la revendication 1, caractérisé en ce que la face inférieure du couvercle présente une douille entaillée axialement (32) ayant un bord orienté vers l'intérieur, et que le tenon central (10) a une collerette (14), de telle sorte que la douille peut être montée sur le tenon à la façon d'un bouton pression avec un déclic.

4. Dispositif de fixation selon la revendication 1, caractérisé en ce que le couvercle (3) a un bord (31) recouvrant l'anneau de compression (2) avec un profil extérieur maniable.

5. Dispositif de fixation selon la revendication 1, caractérisé en ce que le dessus du couvercle a une collerette (33) ayant intérieurement la forme d'une sphère creuse pour retenir par serrage une extrémité sphérique (4) d'un organe de fixation.

6. Dispositif de fixation selon la revendication 5, caractérisé en ce que l'extrémité sphérique (4) présente un trou borgne central ayant un rétrécissement graduel et comporte des entailles en croix dans la direction du trou borgne tandis qu'est placée dans le trou borgne une rondelle-ressort agissant radialement.
